Europäisches Patentamt

European Patent Office

Office européen des brevets

(19)

(11) Veröffentlichungsnummer: **0 241 430**
**B1**

(12) ## EUROPÄISCHE PATENTSCHRIFT

(45) Veröffentlichungstag der Patentschrift:
19.12.90

(51) Int. Cl.⁵: **G02B 26/10**

(21) Anmeldenummer: 87810222.7

(22) Anmeldetag: 08.04.87

(54) Oszillierende lineare Auslenkvorrichtung.

(30) Priorität: 11.04.86 CH 1435/86

(43) Veröffentlichungstag der Anmeldung:
14.10.87 Patentblatt 87/42

(45) Bekanntmachung des Hinweises auf die Patenterteilung:
19.12.90 Patentblatt 90/51

(84) Benannte Vertragsstaaten:
AT BE CH DE ES FR GB GR IT LI LU NL SE

(56) Entgegenhaltungen:
DE-B- 2 262 713
DE-B- 2 715 908
US-A- 3 624 574
US-A- 3 678 308
US-A- 4 316 648
US-A- 4 370 019

(73) Patentinhaber: Keiser, Heinz, Obere Aegerten 12,
CH-8143 Stallikon(CH)

(72) Erfinder: Keiser, Heinz, Obere Aegerten 12,
CH-8143 Stallikon(CH)

(74) Vertreter: White, William et al, Isler AG
Patentanwalts-Bureau Walchestrasse 23,
CH-8006 Zürich(CH)

## Beschreibung

Die vorliegende Erfindung betrifft eine oszillierende lineare Auslenkvorrichtung gemäss dem Oberbegriff des unabhängigen Patentanspruchs 1.

Beispielsweise für die Abtastung von Bildern bei Fernübertragung oder zur Kodierung und Speicherung der Information ist es gemäss der CH-A-468 135 bekannt, das Bild zeilenweise abzutasten. Dazu wird ein Lichtstrahl mit einem drehbaren Spiegel oszillierend ausgelenkt und über das Bild bewegt, wo der Lichtstrahl moduliert und reflektiert wird, so dass die Helligkeitsunterschiede mit einem photoelektrischen Element in analoge elektrische Signale umgewandelt werden können.

Ein Ausführungsbeispiel für den Antrieb eines solchen Spiegels ist in der US-A-3,624,574 beschrieben. Dabei wird ein Weicheisenstab einem vormagnetisierenden Magnetfeld zweier sich diametral. bezüglich einer Rotationsachse gegenüberliegenden Permanentmagneten ausgesetzt. In orthogonaler Richtung zu diesem Magnetfeld ist ein steuerndes Magnetfeld aus zwei sich ebenfalls diametral gegenüberliegenden Magnetspulen vorgesehen. Der Weicheisenstab mit seiner Längsachse in der Rotationsachse ist einerends mit einem Torsionsstab starr verbunden und trägt den Spiegel für die Strahlauslenkung. Der am einen Ende eingespannte Torsionsstab gibt die Mittellage für den Spiegel, nämlich in seiner unverdrehten Normallage, bzw. in einer um weniges durch das vormagnetisierende Magnetfeld ausgelenkten Lage.

Eine solche Anordnung hat den Nachteil, dass eine zusätzliche Masse zu bewegen ist, wobei in dieser Masse noch Energie aus dem Antrieb entzogen und in Wärme umgewandelt wird, nämlich durch die Torsionskraft. Zusätzlich dazu muss der Torsionsstab eine minimale endliche Länge haben, die eine genügende Auslenkung ergibt oder dann muss der Spiegel soweit vom abzutastenden Bild entfernt sein, dass infolge dieses Abstandes eine genügende Auslenkung erhalten werden kann. Beides sind Grössern, durch die ein Gerät in nachteiliger Weise vergrössert wird.

Es ist deshalb eine Aufgabe der Erfindung eine Auslenkvorrichtung zu schaffen, bei der die Nullpunkteinstellung ohne mechanische Mittel erfolgt und bei der die Begrenzung des Auslenkwinkels durch den Antrieb bestimmt ist und nicht durch eine sich proportional zum Auslenkwinkel vergrössernde Rückstellkraft.

Erfindungsgemäss wird dies durch die Merkmale im kennzeichnenden Teil des unabhängigen Patentanspruchs 1 erreicht.

Nachfolgend werden Ausführungsbeispiele der Erfindung erläutert. Die Figuren zeigen:

Fig. 1 eine Draufsicht auf eine erste Ausführungsform einer Auslenkvorrichtung von der Linie I-I in Fig. 2 aus betrachtet,

Fig. 2 einen Aufriss der Auslenkvorrichtung, und

Fig. 3 eine Draufsicht, ähnlich Fig. 1, auf eine weitere Ausführungsform einer Auslenkvorrichtung.

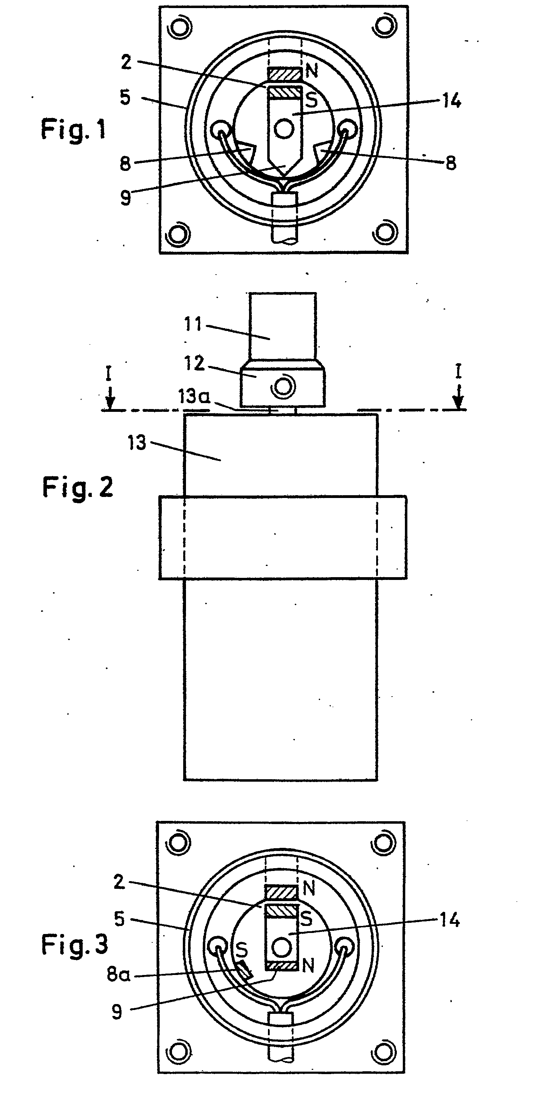

Die Auslenkvorrichtung besteht im Grundsatz aus einem Gleichstrommotor 13, der mit einer Wechselstromspeisung eine harmonische Schwingung im Takt der Frequenz des Wechselstromes ausführt. An der Abtriebswelle 13a des Gleichstrommotors 13 ist ein Spiegelhalter 12 befestigt, auf dem ein Spiegel 11 axial zur Welle 13a befestigt ist. Unterhalb des Spiegelhalters 12 befindet sich ein sich in diagonaler Richtung auf beide Seiten der Welle 13a erstreckender Träger 9. Einerseits ist gemäss Fig. 1 ein Permanentmagnet 2, beispielsweise ein Somarium-Kobalt-Magnet befestigt, derart, dass sein Südpol radial nach aussen zeigt. An einer Stelle am Umfang des Gehäuses 5 ist ein anderer Permanentmagnet 2 beispielsweise aus demselben Material angeordnet, der mit seinem Nordpol N radial nach innen zeigt bzw. dem Südpol S auf dem Träger 9 gegenüberliegt. Damit ergibt sich eine magnetisch Anziehung zwischen den beiden Polen N und S und der Träger kehrt ohne äussere Krafteinwirkung immer in diese vorbestimmte Lage zurück.

Der Gleichstrommotor 13 muss damit ausser der Beschleunigungskraft für die gesamte bewegte Masse nur die magnetische Anziehungskraft dieser beiden Magnete in der Nullstellung oder der Mittelstellung überwinden, die zudem mit grösserem Abstand kleiner wird.

Um zu verhindern, dass der Rotor überschwingt oder sogar ins Rotieren kommt, sind zwei Endanschläge 8 vorhanden, gegen die der Träger mit dem dem Magnet 2 gegenüberliegenden Endteil anschlägt, wenn der Auslenkwinkel zu gross werden sollte.

Eine Variante ist in Fig. 3 dargestellt. Hier sind die Anschläge 8 durch wenigstens einen Permanentmagneten 8a ersetzt. Wenn der Träger 9 aus Magnetmaterial besteht oder auf seiner gesamten Länge ferromagnetisch ist, so kann gegenüberliegend zum genannten Magnetpol S der Gegenpol N radial nach aussen gerichtet sein. An wenigstens einer Stelle des Umfangs, wie beispielsweise orthogonal zur Nullstellung des Trägers, könnte ein weiterer Magnet mit seinem Nordpol N angeordnet sein, so dass eine Abstossungskraft erzeugt wird. Somit kann der Träger 9 keine Drehung um ganze 360° ausführen und zu rotieren anfangen.

## Patentansprüche

1. Oszillierende lineare Auslenkvorrichtung für einen Laserstrahl, bei der ein Strahlablenkelement mittels einem oszillierenden elektromechanischen Antrieb bewegt wird, dadurch gekennzeichnet, dass zur Festlegung einer Nullstellung ein Magnetsystem vorhanden ist, das einen ersten Permanentmagneten (1) umfaßt, der ortsfest gehalten ist, und einen zweiten Permanentmagneten (2), der am elektromechanischen Abtrieb (13) befestigt ist, und daß die beiden Permanentmagnete so angeordnet sind, daß sich in einer der Nullstellung entsprechenden Position des Antriebs Pole entgegengesetzter Polarität gegenüberliegen.

2. Vorrichtung nach Patentanspruch 1, dadurch gekennzeichnet, dass der elektromechanische Antrieb ein mit Wechselstrom gespeister Gleichstrommotor (13) ist, und dass das Strahlauslenkelement (11) sowie der zweite Permanentmagnet (2) am Rotor (13a) befestigt sind.

3. Vorrichtung nach Patentanspruch 1 oder 2, dadurch gekennzeichnet, dass am Rotor (13a) ein Träger (9) mit beidseits der Drehachse vorhandenen Trägerarmen für den Permanentmagneten (2) und den Spiegel (11) vorhanden ist, und dass zwei gehäusefeste mechanische Anschläge (8) vorgesehen sind, um den Drehwinkel für den Träger (9) zu begrenzen.

4. Vorrichtung nach Patentanspruch 1 oder 2, dadurch gekennzeichnet, dass wenigstens ein weiterer gehäusefest gehaltener Permanentmagnet (8a) mit gleicher Polung wie der zweite Permanentmagnet (2) am Abtrieb (13a) vorhanden ist, um ein Ueberschwingen zu verhindern.

## Claims

1. Oscillating linear deflection device for a laser beam, in which a beam deflection element is moved by means of an oscillating electromechanical drive, characterized in that, for establishing a zero position, a magnet system is provided which comprises a first permanent magnet (1) which is mounted so as to be stationary, and a second permanent magnet (2) which is fastened to the electromechanical output (13), and in that the two permanent magnets are arranged in such a way that poles of opposite polarity lie opposite one another when the drive is in a position corresponding to the zero position.

2. Device according to Patent Claim 1, characterized in that the electromechanical drive is a direct current motor (13) fed with alternating current, and in that the beam deflection element (11) and also the second permanent magnet (2) are fastened to the rotor (13a).

3. Device according to Patent Claim 1 or 2, characterized in that provided on the rotor (13a) is a support (9) with support arms provided on either side of the axis of rotation for the permanent magnet (2) and the mirror (11), and in that two mechanical stops (8) fixed to the housing are provided for limiting the angle of rotation for the support (9).

4. Device according to Patent Claim 1 or 2, characterized in that at least one further permanent magnet (8a) which is mounted fixed to the housing and has the same polarization as the second permanent magnet (2) is provided on the power take-off (13a) in order to prevent overshooting.

## Revendications

1. Dispositif de déviation linéaire oscillant pour un rayon laser, dans lequel un élément de déviation du rayon est déplacé à l'aide d'un entraînement électromécanique oscillant, caractérisé en ce que pour la détermination d'une position zéro est prévu un système d'aimant, qui comprend un premier aimant permanent (1), qui est maintenu fixe, et un second aimant permanent, qui est fixé à l'entraînement électromécanique (13), et en ce que les deux aimants permanents sont disposés de sorte que dans une position de l'entraînement correspondant à la position zéro, des pôles de polarité opposée se trouvent en face l'un de l'autre.

2. Dispositif selon la revendication 1, caractérisé en ce que l'entraînement électromécanique est un moteur à courant continu (13) alimenté en courant alternatif, et en ce que l'élément de déviation du rayon (11) ainsi que le second aimant permanent (2) sont fixés sur le rotor (13a).

3. Dispositif selon la revendication 1 ou 2, caractérisé en ce que sur le rotor (13a) est prévu un support (9) avec des bras prévus de part et d'autre de l'axe de rotation pour les aimants permanents (2) et le miroir (11), et en ce que deux butées mécaniques (8) solidaires du boîtier sont prévues, afin de limiter l'angle de rotation du support (9).

4. Dispositif selon la revendication 1 ou 2, caractérisé en ce qu'au moins un autre aimant permanent (8a) solidaire du boîtier et de même polarité que le second aimant permanent (2) est prévu sur l'entraînement (13a), afin d'empêcher une suroscillation.

Fig. 1

2
5
8
9

N
S

14

8

8

Fig. 2

11
12
13a
13

I

I

Fig. 3

2
5
8a
9

N
S
S
N

14